# EUROPÄISCHE PATENTSCHRIFT

(11) **EP 1 989 338 B1**
(45) Veröffentlichungstag und Bekanntmachung des Hinweises auf die Patenterteilung: **29.09.2010**
(21) Anmeldenummer: 07701335.7
(22) Anmeldetag: 23.02.2007
(51) Int. Cl.: C22C 33/02, B22F 3/00, B22F 1/00, B22F 3/10, B22F 3/11, B22F 9/04, C22C 1/10, H01M 8/12, H01M 8/02

(54) **PORÖSER, MISCHOXIDE ENTHALTENDER KÖRPER AUS EINER EISEN-CHROM-LEGIERUNG FÜR BRENNSTOFFZELLEN**
POROUS BODY CONTAINING MIXED OXIDES MADE FROM AN IRON/CHROME ALLOY FOR FUEL CELLS
CORPS POREUX COMPRENNANT OXYDES MIXTES FAIT D'UN ALLIAGE A BASE DE FER-CHROME POUR PILES A COMBUSTIBLE

(30) Priorität: 27.02.2006 AT 1432006
(43) Veröffentlichungstag der Anmeldung: 12.11.2008
(73) Patentinhaber: PLANSEE SE, 6600 Reutte (AT)
(72) Erfinder: GLATZ, Wolfgang, A-6600 Reutte (AT); KUNSCHERT, Georg, A-6600 Pflach (AT); ZOBL, Gebhard, A-6677 Schattwald (AT); ZACH, Reinhold, A-6600 Reutte (AT)
(86) Internationale Anmeldenummer: PCT/AT2007/000092
(87) Internationale Veröffentlichungsnummer: WO 2007/095658

(56) Entgegenhaltungen:
- EP-A- 0 487 276
- EP-A- 1 263 067
- EP-A- 1 318 560
- EP-A1- 0 488 716
- EP-A1- 1 065 020
- EP-A1- 1 528 112
- WO-A-01/49440
- DE-C1- 19 643 156
- US-B1- 6 410 160
- THOMAS MALKOW: "Untersuchungen zum Langzeitverhalten von metallischen Interkonnektorwerkstoffen der Hochtemperatur-Brennstoffzelle(SOFC) im Hinblick auf die Kompatibilität mit kathodenseitigen Kontaktschichten" VON DER FAKULTAET FUER MASCHINENWESEN DER RHEINISCH- WESTFAELISCHEN HOCHSCHULE AACHEN ZUR ERLANGUNG DES AKADEMISCHEN GRADES EINES DOKTORS DER INGENIEURWISSENSCHAFTEN GENEHMIGTE DISSERTATION, XX, XX, 30. Oktober 1998 (1998-10-30), Seiten 152-155, XP002436526

## Beschreibung

Die Erfindung betrifft einen porösen Körper mit einer Dichte von 40 bis 70 % der theoretischen Dichte und einer überwiegend offenporigen Struktur, welcher aus miteinander versinterten Körnern einer Fe-Basis Legierung besteht.

Derartige poröse Korper finden als Trägersubstrat in Hochtemperatur-Brennstoffzellen (SOFC; solid oxide fuel cell) Verwendung. Diese werden bei Temperaturen von etwa 650 bis 900°C betrieben, da erst bei diesen Temperaturen die thermodynamischen Bedingungen für eine effiziente Energieerzeugung gegeben sind. Bei planaren SOFC-Systemen werden einzelne elektrochemische Zellen, die aus einer Kathode, einem Feststoffelektrolyten und einer Anode aufgebaut sind, zu einem so genannten Stack gestapelt und durch metallische Komponenten, die so genannten Interkonnektoren, Bipolarplatten oder Stromsammler, verbunden. Diese metallischen Komponenten müssen spezifische Eigenschaften erfüllen. So muss die thermische Ausdehnung möglichst gut an die der Zellenwerkstoffe angepasst sein. Weiters muss eine hohe Korrosionsbeständigkeit gegenüber dem Anoden- und Kathodengas gegeben sein. Dabei gebildete Korrosionsprodukte müssen eine gute Elektronenleitfähigkeit aufweisen. Da Interkonnektoren Anode und Kathode kontaktieren, haben sie auch die Funktion die beiden Gasräume zu trennen und müssen daher vollständig gasdicht sein.

Je besser die Kontaktierung auf Anoden- und Kathodenseite durch die Interkonnektor-Komponenten erfolgt, desto geringer sind die ohmschen Widerstände, die sich durch die serielle Schaltung bei planaren SOFC Systemen besonders bemerkbar machen. Um die Kontaktierungsproblematik von Interkonnektor-Komponenten besser in den Griff zu bekommen, wurden, neben dem Aufbringen von keramischen, meist perowskitischen Kontaktschlickern, neue planare SOFC Konzepte entwickelt; in jüngster Vergangenheit auch das so genannte MSC (metal supported cell) - Konzept. Dabei werden beispielsweise in herkömmliche, aus kompaktem Material bestehende Interkonnektor-Komponenten poröse Körper als Trägersubstrate eingelegt oder eingeschweißt, auf die unmittelbar über Beschichtungsverfahren, wie beispielsweise Hochgeschwindigkeitsflammspritzen, Plasmaspritzen und Versprühen eines Slurrys, die Zellenwerkstoffe, meist beginnend mit der Anodenschicht, aufgebracht werden. Durch die dabei bewerkstelligte unmittelbare Anbindung von Elektrode und Interkonnektor-Komponente kann so eine sehr gleichmäßige, im Mikromaßstab skalierte, Kontaktierung, wie auch eine sehr gleichmäßige Gaszufuhr an die Elektrode erreicht werden, wobei letzteres bei herkömmlichen planaren SOFC-Brennstoffzellen häufig von aufwändig in die Oberfläche von dichten Interkonnektor-Komponenten eingefrästen, makroskopischen Gaskanälen übernommen wurde. Zudem können die Zellenwerkstoffe durch die Verwendung von porösen Trägersubstraten deutlich dünner ausgeführt werden, da die Zellenwerkstoffe keine selbsttragenden Komponenten darstellen. So kann Material gespart, aber auch, aus thermodynamischen Gründen, die Betriebstemperatur von SOFC-Systemen gesenkt werden.

Letztgenannten Vorteilen der guten Gaszufuhr und Kontaktierung stehen unmittelbar, ebenso auf die hohe Porosität des Trägersubstrats zurückführbare Nachteile gegenüber. Durch die hohe Porosität ist die Oberfläche des Trägersubstrats, die in Kontakt mit den SOFC spezifischen Gasen steht, sehr groß. Dies kann zu einer verstärkten Korrosion führen. Zudem bedeutet eine große Oberfläche auch eine hohe Triebkraft für Sinterprozesse, wodurch es im Betrieb zu einem Schwund der porösen Trägerplatte kommen kann. Die Oberfläche steigt mit Abnahme des Porendurchmessers bei konstanter Dichte bzw. mit Zunahme der Porosität an.

Für den Einsatz in MSC und ASC (anode supported cell) SOFC-Systemen ist es von Vorteil, poröse metallische Trägermaterialien zusammen mit herkömmlichen Interkonnektor-Komponenten zu verwenden, da diese kostengünstiger und duktiler als keramische Trägermaterialien sind und zudem eine höhere elektronische Leitfähigkeit aufweisen. Gegenüber dem herkömmlichen Interkonnektor bringt die Verwendung solcher poröser Körper den Vorteil, dass sowohl die Gaszufuhr durch den porösen Körper erfolgen kann, als auch die Kontaktierung zu den Zellenwerkstoffen deutlich verbessert, vergleichmäßigt und über die Betriebszeit auf einem konstanten Niveau gehalten wird.

Handelsübliche oder auch für SOFC Anwendungen eigens entwickelte poröse Produkte wie Vliese, Gewirke und Gestricke, wie in der EP 1 455 404, der WO 02/101859 A2, der DE 101 61 538 und der EP 1 318 560 beschrieben, weisen bei für SOFC-Systeme üblichen Anwendungsbedingungen, d.h. Temperaturen von rund 650-900°C in korrosiven Atmosphären, zufrieden stellende Korrosionsbeständigkeit auf und haben einen, gegenüber den keramischen Zellenwerkstoffen, angepassten thermischen Ausdehungskoeffizient. Es hat sich jedoch gezeigt, dass auf diesen porösen Trägersubstraten, das Auftragen von Zellenwerstoffen oder auch von anderen keramischen Schutzschichten über oben beschriebene Beschichtungsverfahren mit nicht ausreichend hoher Qualität möglich ist, da das aus feinen Metalldrähten / -fasern aufgebaute poröse Trägersubstrat keine gleichmäßige Angriffsfläche bietet und zudem bei Anwendungsbedingungen keine ausreichend hohe mechanische Stabilität gegeben ist.

In EP 0 488 716 wird ein poröses Trägersubstrat beschrieben.

In der DE 103 25 862 wird ein metallisches Trägersubstrat mit einem maximalen Chromanteil von 13% beschrieben. In der Literatur (Werner Schatt, "Pulvermetallurgie Sinter- und Verbundwerkstoffe", 3. Aufl., 1988; S.371) sind für die Herstellung von porösen Körpern Sintertemperaturen von 1100-1250°C angegeben. Da die Anwendungstemperatur in SOFC-Systemen an die übliche Sintertemperatur von Fe-Cr-Werkstoffen heranreicht, neigen handelsübliche poröse Trägersubstrate, die aus kompaktierten, gesinterten metallischen Pulvern hergestellt werden, zum Nachsintern, sodass es nicht möglich ist, ein poröses Material mit einer Dichte von unter 70% der theoretischen Dichte über die langen Einsatzzeiten hin zu erhalten. Das unerwünschte Nachsintern führt insbesondere durch die thermozyklische Betriebsweise von SOFC-Systemen zu einer irreversiblen Schädigung der abgeschiedenen Zellenwerkstoffe. Auch durch das Zugeben von anorganischen oder organischen Substanzen zur Porenbildung, wie dies aus der WO 01/49440 bekannt ist, kann ein Nachsintern einer Fe-Cr Legierung bei den oben erwähnten Einsatzbedingungen nicht ausgeschlossen werden, da das Nachsintern sowohl auf Oberflächen- als auch Volumensintermechanismen zurückzuführen ist.

Aufgabe der Erfindung ist es einen porösen Körper aus einer Fe-Cr Legierung bereit zu stellen, der auch bei Einsatztemperaturen von bis zu 900°C nicht zum Nachsintern neigt, auf dem sich keramische und Cermet Schichten gut abscheiden lassen und der weiters eine hohe Korrosionsbeständigkeit und eine ausreichende mechanische Festigkeit aufweist.

Die Aufgabe wird durch den unabhängigen Anspruch gelöst.

Der poröse Körper weist dabei eine Dichte von 40 bis 70 % der theoretischen Dichte auf, hat eine überwiegend offenporige Struktur und ist aus Pulverkörnern aufgebaut, die gut miteinander versintert sind. Unter guter Versinterung ist dabei zu verstehen, dass sich zwischen den einzelnen Körnern Sinterhälse mit einem Sinterhalsdurchmesser > 1/5 x Korndurchmesser, bevorzugt > 1/3 x Korndurchmesser, bilden. Die Legierung besteht aus 15 bis 35 Gew.% Cr, 0,01 bis 2 Gew.% eines oder mehrerer Elemente der Gruppe Ti, Zr, Hf, Mn, Y, Sc, Seltenerdmetalle, 0 bis 10 Gew.% Mo und/oder Al, 0 bis 5 Gew.% eines oder mehrerer Metalle der Gruppe Ni, W, Nb, Ta, 0,1 bis 1 Gew.% O, Rest Fe und für Stahl typische Verunreinigungen. Die Begründung für den unteren und oberen Grenzwert für die jeweiligen Legierungselemente ist in nachstehender Tabelle 1 angegeben.

Die Legierung enthält nominell keinen Kohlenstoff, wobei sich jedoch herstelltechnisch C-Gehalte von ca. 50 bis 1000 µg/g einstellen. Weiters bilden zumindest ein Metall der Gruppe Y, Sc, Seltenerdmetalle und zumindest ein Metall der Gruppe Cr, Ti, Al, Mn ein Mischoxid. Der Mischoxidgehalt beträgt 0,01 bis 2 Gew.%. Der poröse Körper kann zudem 0,01 bis 1,5 Gew.% eines oder mehrerer Oxide der Metalle der Gruppe Y, Sc, Seltenerdmetalle, Ti, Al enthalten.
Das erfindungswesentliche Mischoxid bildet sich bevorzugt bei Verwendung von mechanisch legiertem Pulver und Sintertemperaturen von 1250°C bis 1470°C aus. Es hat sich nun gezeigt, dass bei Ausbildung dieses Mischoxids die Sinterfähigkeit stark reduziert wird. Es ist somit möglich, bei homologen Temperaturen von bis zu 0,98 x Tₛ (Tₛ ...Solidustemperatur) unter Verwendung von relativ feinkörnigen Pulvern mit einer typischen mittleren Teilchengröße nach Fisher von 5 bis 50 µm poröse Strukturen herzustellen. Der Volumensinterschwund beträgt dabei unter 5 %. Derartige poröse Strukturen weisen bei den, im Vergleich zur Sintertemperatur deutlich niedrigeren Einsatztemperaturen nahezu keinen Schwund auf.
Bei 900°C/10h beträgt der Schwund zuverlässig unter 1 %.

**Tabelle 1**

| Element | unterer Grenzwert [Gew.%] | Begründung für unteren Grenzwert | oberer Grenzwert [Gew.%] | Begründung für oberen Grenzwert |
|---|---|---|---|---|
| Cr | 15 | zu schlechte Korrosionsbeständigkeit, zu geringer Effekt auf Mischoxidbildung, | 35 | zu hohe Kosten, Versprödung durch Sigmaphasenbüdung |
| Mn | 0,01 | zu starkes Komgrenzenwachstum | 2 | durch sehr starke Sauerstoffaffinität der sich bildenden Oxide Verschlechterung der Korrosionsbeständigkeit, bei Ti Versprödung durch Sigmaphasenbildung |
| Zr, Hf, Ti, Y, Sc, Selten-Erd Metalle Erd Metalle | 0,01 | nicht ausreichende Korrosionsbeständigkeit, zu geringer Effekt auf Mischoxidbildung, zu geringe Sinterhemmung | 2 | |
| Mo | 0 | | 10 | hohe Kosten, Versprödung durch Sigmaphasenbildung; schlechtere Verarbeitbarkeit |
| Al | 0 | | 10 | Versprödung der Matrix, schlechte Verarbeitbarkeit |
| Ni | 0 | | 5 | Verschlechterung der Korrosionsbeständigkeit, Erhöhung der thermischen Ausdehnung, da Phasenumwandlung |
| W | 0 | | 5 | Versprödung, Verschlechterung der Korrosionsbeständigkeit |
| Nb | 0 | | 5 | Versprödung, hohe Kosten |
| Ta | 0 | | 5 | Versprödung, hohe Kosten |
| O | 0,1 | nicht ausreichende Bildung von Mischoxiden | 1 | Verschlechterung der Korrosionsbeständigkeit, innere Oxidation |

Es hat sich weiters gezeigt, dass die Wirkung des Mischoxids dann besonders ausgeprägt ist, wenn 1 bis 95 % der Oberfläche der versinterten Körner mit dem Mischoxid bedeckt ist. Die Mischoxide können dabei als diskrete Teilchen oder auch als die Kornoberfläche bedeckende Schichten auftreten. Bevorzugt enthält der poröse Körper 0,01 bis 2 Gew.% Y-Ti, Y-Al und/oder Y-Al-Ti Mischoxid. Weiters hat es sich als vorteilhaft erwiesen, wenn die Legierung 0,01 bis 1,5 Gew.% Y₂O₃, 0,5 bis 5 Gew.% Mo und 0,1 bis 1 Gew.% Ti enthält. In einer bevorzugten Ausführung beträgt die Porengröße 10 bis 30 µm.
Zudem zeichnet sich die erfindungsgemäße Legierung durch eine außergewöhnlich hohe Beständigkeit gegenüber Korrosion durch die Kathoden- und Anodengase aus.

Für die Herstellung des porösen Körpers kommen Pulvermischungen von elementaren oder vorlegierten Pulvern zur Verwendung. Die Pulvermischung wird bevorzugt mechanisch legiert. Das mechanische Legieren erfolgt in einer Hochenerglemühle, bevorzugt in einem Attritor. Die typischen Mahlzeiten bewegen sich bei 10 bis 30 h. Anschließend wird die Pulvermischung mit einem organischen Binder vermengt, wobei der Volumen-Bindergehalt in etwa dem Porenvolumen des gesinterten Körpers entspricht. Das Sintern erfolgt bei 1250°C bis 1470°C unter Schutzgas.
Die porösen Körper weisen eine Dicke von 200 µm bis 20 mm, bevorzugt von 500 bis 3000 µm auf. Es können auch geometrisch komplexe Strukturen Verwendung finden.
Auf dem porösen Körper lassen sich im Vergleich zu den handelsüblichen Drahtvliesen, -gewirken und -gestricken Schutzschichten, sowie aktive keramische oder cermetartige Schichten sehr gut abscheiden. Die porösen Körper eignen sich daher besonders gut für den Einsatz in SOFC Systemen als Trägersubstrate.
Im Folgenden ist die Erfindung durch Beispiele näher erläutert.

### Beispiel 1

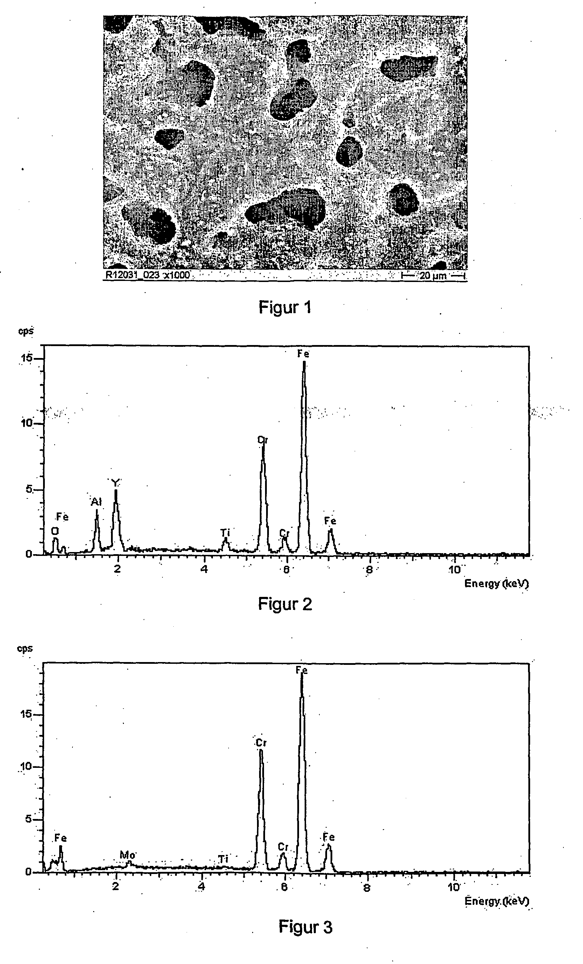

Figur 1 zeigt Mischoxidpartikel auf der Kornoberfläche des porösen Körpers.
Figur 2 zeigt ein typisches EDX-Spektrum eines Mischoxidpartikels.
Figur 3 zeigt ein typisches EDX-Spektrum der metallischen Oberflache des porösen Körpers.
In einem Taumelmischer wurde eine Pulvermischung mit einer, auf den porösen Körper bezogenen Zusammensetzung von 26 Gew.% Cr, 0,5 Gew.% Y₂O₃, 2 Gew.% Mo, 0,3 Gew.% Mn, 0,3 Gew.% Ti und 0,03 Gew.% Al homogenisiert und im Anschluss daran 12h unter Schutzgas in einem Attritor mechanisch legiert. Das so erhaltene Pulver wurde auf eine Kornfraktion von < 36µm abgesiebt. Nach Zugabe eines organischen Binders wurden Grünlinge mit der Dimension 500 x 300 x 0,65 mm geformt. Der Volumengehalt des Binders entsprach dabei in etwa der angestrebten Porosität des porösen Körpers. Die Sinterung erfolgte bei 1450°C unter Wasserstoff, wobei der gemessene laterale Sinterschwund < 1 % betrug. Der gesinterte Körper wies eine Dichte von 4,2 g/cm³ und eine mittlere Porengröße von 10 µm auf. An der Kornoberfläche wurde ein Al - Ti - Y haltiges Mischoxid detektiert, wie dies aus einem Vergleich der Oberflächen- und Bulkanalyse (Figur 2, 3) hervorgeht. Auf der Oberfläche der versinterten Körner betrug die Mischoxid-Flächenbelegung ca. 5%.

### Beispiel 2

In einem Taumelmischer wurde eine Pulvermischung mit einer, auf den porösen Körper bezogenen Zusammensetzung von 18 Gew.% Cr, 0,5 Gew.% La₂O₃, 3 Gew.% Nb, 0,3 Gew.% Mn, 0,3 Gew.% Zr und 0,03 Gew.% Al homogenisiert und im Anschluss daran 15h unter Schutzgas in einem Attritor mechanisch legiert. Die weitere Verarbeitung erfolgte gemäß Beispiel 1, jedoch wurde eine Kornfraktion von < 100 µm abgesiebt. Der gesinterte Körper wies eine Dichte von 4,4 g/cm³ und eine mittlere Porengröße von 30 µm auf. An der Kornoberfläche wurde ein Al-Zr-La hältiges Mischoxid detektiert. Auf der Oberfläche der versinterten Körner betrug die Mischoxid - Flächenbelegung ca. 7%.

## Patentansprüche

1. Poröser Körper mit einer Dichte von 40 bis 70 % der theoretischen Dichte und einer überwiegend offenporigen Struktur, bestehend aus miteinander versinterten Körnern einer Fe-Basis Legierung mit Fe > 50 Gew:%, wobei
die Legierung aus
■ 15 bis 35 Gew.% Cr;
■ 0,01 bis 2 Gew.% eines oder mehrerer Elemente der Gruppe Ti, Zr, Hf, Mn, Y, Sc, Seltenerdmetalle;
■ 0 bis 10 Gew.% Mo und/oder Al;
■ 0 bis 5 Gew.% eines oder mehrerer Metalle der Gruppe Ni, W, Nb, Ta; ■ 0,1 bis 1 Gew.% O;
■ Rest Fe und Verunreinigungen besteht und
zumindest ein Metall der Gruppe Y, Sc, Seltenerdmetalle und zumindest ein Metall der Gruppe Cr, Ti, Al, Mn ein Mischoxid bilden, wobei der Mischoxidgehalt 0,01 bis 2 Gew.% beträgt.

2. Poröser Körper nach Anspruch 1, **dadurch gekennzeichnet, dass** dieser 0,01 bis 1,5 Gew.% eines oder mehrerer Oxide der Metalle der Gruppe Y, Sc, Seltenerdmetalle, Ti, Al enthält.

3. Poröser Körper nach einem der Ansprüche 1 bis 2, **dadurch gekennzeichnet, dass** 1 bis 95 % der Oberfläche der versinterten Körner mit dem Mischoxid bedeckt ist.

4. Poröser Körper nach einem der Ansprüche 1 bis 3, **dadurch gekennzeichnet, dass** dieser bei 900°C / 10 h einen Volumenschwund < 1 % aufweist.

5. Poröser Körper nach einem der Ansprüche 1 bis 4, **dadurch gekennzeichnet, dass** die Legierung 0,01 bis 2 Gew.% Y-Ti, Y-Al und/oder, Y-Al-Ti Mischoxid enthält.

6. Poröser Körper nach einem der Ansprüche 1 bis 5, **dadurch gekennzeichnet, dass** die Legierung 18 bis 28 Gew.% Cr enthält.

7. Poröser Körper nach einem der Ansprüche 1 bis 6, **dadurch gekennzeichnet, dass** die Legierung 0,5 bis 5 Gew.% Mo enthält.

8. Poröser Körper nach einem der Ansprüche 1 bis 7, **dadurch gekennzeichnet, dass** die Legierung 0,1 bis 1 Gew.% Ti enthält.

9. Poröser Körper nach einem der Ansprüche 1 bis 8, **dadurch gekennzeichnet, dass** die Legierung 0,01 bis 1,5 Gew.% Y₂O₃ enthält.

10. Poröser Körper nach einem der Ansprüche 1 bis 9, **dadurch gekennzeichnet, dass** die mittlere Porengröße 5 bis 100 µm, bevorzugt 10 bis 30 µm beträgt.

11. Poröser Körper nach einem der Ansprüche 1 bis 10, **dadurch gekennzeichnet, dass** die mittlere Korngröße 20 bis 70 µm beträgt.

12. Poröser Körper nach einem der Ansprüche 1 bis 11, **dadurch gekennzeichnet, dass** der Sinterhalsdurchmesser > 1/5 x Korngröße, bevorzugt > 1/3 x Korngröße beträgt.

13. Poröser Körper nach einem der Ansprüche 1 bis 12, **dadurch gekennzeichnet, dass** dieser ein Trägersubstrat ist.

14. Verfahren zur Herstellung eines porösen Körpers nach einem der Ansprüche 1 bis 13, **dadurch gekennzeichnet, dass** dieses zumindest die folgenden Schritte umfasst:
■ Herstellen einer Pulvermischung unter Verwendung von elementaren oder vorlegierten Pulvern
■ Mechanisches Legieren der Pulvermischung
■ Vermengen der Pulvermischung mit Binder, wobei der Volumen-Bindergehalt in etwa dem Porenvolumen des gesinterten Körpers entspricht
■ Sintern bei 1.250°C bis 1.470°C unter Schutzgas.

15. Verwendung eines porösen Körpers nach einem der Ansprüch1 bis 13 in einem Solid Oxide Fuell Cell System.

## Claims

1. Porous body which has a density of from 40 to 70% of the theoretical density and a predominantly open-pored structure and which consists of sintered grains of an Fe-based alloy with Fe > 50 wt.%,
wherein
the alloy consists of
■ from 15 to 35 wt.% Cr;
■ from 0.01 to 2 wt.% of one or more elements from the group Ti, Zr, Hf, Mn, Y, Sc, rare earth metals;
■ from 0 to 10 wt.% Mo and/or Al;
■ from 0 to 5 wt.% of one or more metals from the group Ni, W, Nb, Ta;
■ from 0.1 to 1 wt.% O;
■ remainder Fe and impurities, and
wherein at least one metal from the group Y, Sc, rare earth metals and at least one metal from the group Cr, Ti, Al, Mn form a mixed oxide, wherein the mixed oxide content is from 0.01 to 2 wt.%.

2. Porous body according to claim 1, **characterised in that** it contains from 0.01 to 1.5 wt.% of one or more oxides of metals from the group Y, Sc, rare earth metals, Ti, Al.

3. Porous body according to either claim 1 or claim 2, **characterised in that** from 1 to 95% of the surface of the sintered grains is covered with the mixed oxide.

4. Porous body according to any one of claims 1 to 3, **characterised in that** it exhibits a volume shrinkage < 1% at 900°C/10 hours.

5. Porous body according to any one of claims 1 to 4, **characterised in that** the alloy contains from 0.01 to 2 wt.% Y-Ti, Y-Al and/or Y-Al-Ti mixed oxide.

6. Porous body according to any one of claims 1 to 5, **characterised in that** the alloy contains from 18 to 28 wt.% Cr.

7. Porous body according to any one of claims 1 to 6, **characterised in that** the alloy contains from 0.5 to 5 wt.% Mo.

8. Porous body according to any one of claims 1 to 7, **characterised in that** the alloy contains from 0.1 to 1 wt.% Ti.

9. Porous body according to any one of claims 1 to 8, **characterised in that** the alloy contains from 0.01 to 1.5 wt.% Y₂O₃.

10. Porous body according to any one of claims 1 to 9, **characterised in that** the mean pore size is from 5 to 100 µm, preferably from 10 to 30 µm.

11. Porous body according to any one of claims 1 to 10, **characterised in that** the mean grain size is from 20 to 70 µm.

12. Porous body according to any one of claims 1 to 11, **characterised in that** the sintering neck diameter is > 1/5 x grain size, preferably > 1/3 x grain size.

13. Porous body according to any one of claims 1 to 12, **characterised in that** it is a carrier substrate.

14. Method of producing a porous body according to any one of claims 1 to 13, **characterised in that** it comprises at least the following steps:
■ preparation of a powder mixture using elemental or prealloyed powders,
■ mechanical alloying of the powder mixture,
■ mixing of the powder mixture with binder, the volume binder content corresponding approximately to the pore volume of the sintered body,
■ sintering at from 1250°C to 1470°C under protecting gas.

15. Use of a porous body according to any one of claims 1 to 13 in a solid oxide fuel cell system.

## Revendications

1. Corps poreux d'une densité de 40 à 70% de la densité théorique et d'une structure principalement à pores ouverts, se composant de grains frittés ensemble d'un alliage à base de Fe où Fe > 50% en poids, dans lequel cet alliage se compose de:
- 15 à 35% en poids de Cr;
- 0,01 à 2% en poids d'un ou plusieurs éléments du groupe Ti, Zr, Hf, Mn, Y, Sc, métaux des terres rares;
- 0 à 10% en poids de Mo et/ou Al;
- 0 à 5% en poids d'un ou plusieurs métaux du groupe Ni, W, Nb, Ta;
- 0,1 à 1% en poids d'O;
- solde Fe et impuretés, et
au moins un métal du groupe Y, Sc, métaux des terres rares et au moins un métal du groupe Cr, Ti, Al, Mn forment un oxyde mixte, et
la teneur en oxyde mixte est de 0,01 à 2% en poids.

2. Corps poreux selon la revendication 1, **caractérisé en ce que** celui-ci contient 0,01 à 1,5% en poids d'un ou plusieurs oxydes des métaux du groupe Y, Sc, métaux des terres rares, Ti, Al.

3. Corps poreux selon la revendication 1 ou 2, **caractérisé en ce que** 1 à 95% de la surface des grains frittés est recouverte de l'oxyde mixte.

4. Corps poreux selon l'une quelconque des revendications précédentes, **caractérisé en ce qu'**il présente une diminution volumique <1% à 900°C/10h.

5. Corps poreux selon l'une quelconque des revendications précédentes, **caractérisé en ce que** l'alliage contient 0,01 à 2% en poids d'oxyde mixte de Y-Ti, Y-Al et/ou Y-Al-Ti.

6. Corps poreux selon l'une quelconque des revendications précédentes, **caractérisé en ce que** l'alliage contient 18 à 28% en poids de Cr.

7. Corps poreux selon l'une quelconque des revendications précédentes, **caractérisé en ce que** l'alliage contient 0,5 à 5% en poids de Mo.

8. Corps poreux selon l'une quelconque des revendications précédentes, **caractérisé en ce que** l'alliage contient 0,1 à 1 % en poids de Ti.

9. Corps poreux selon l'une quelconque des revendications précédentes, **caractérisé en ce que** l'alliage contient 0,01 à 1,5% en poids de Y₂O₃.

10. Corps poreux selon l'une quelconque des revendications précédentes, **caractérisé en ce que** la dimension moyenne des pores est de 5 à 100 µm, de préférence 10 à 30 µm.

11. Corps poreux selon l'une quelconque des revendications précédentes, **caractérisé en ce que** la granulométrie moyenne est de 20 à 70 µm.

12. Corps poreux selon l'une quelconque des revendications précédentes, **caractérisé en ce que** le diamètre de col de frittage est > 1/5 de la granulométrie, de préférence > 1/3 de la granulométrie.

13. Corps poreux selon l'une quelconque des revendications précédentes, **caractérisé en ce qu'**il est un substrat support.

14. Procédé de fabrication d'un corps poreux selon l'une quelconque des revendications précédentes, **caractérisé en ce qu'**il comprend au moins les étapes consistant à:
- préparer un mélange pulvérulent en utilisant des poudres élémentaires ou pré-alliées,
- allier mécaniquement le mélange pulvérulent
- homogénéiser le mélange pulvérulent avec des liants, la teneur volumique en liants correspondant approximativement au volume des pores du corps fritté
- fritter à une température de 1.250 °C à 1.470 °C sous gaz protecteur.

15. Utilisation d'un corps poreux selon l'une quelconque des revendications 1 à 13 dans un système de pile à combustible à oxyde solide (Solid oxyde fuel cell, en abrégé SOFC).
